# EUROPEAN PATENT SPECIFICATION

(11) **EP 3 871 955 B1**
(45) Date of publication and mention of the grant of the patent: **06.09.2023**
(21) Application number: 21000059.2
(22) Date of filing: 27.02.2021
(51) Int. Cl.: B62D 53/00, B62B 5/00

(54) **TRANSPORT SET**
TRANSPORT-SET
KIT DE TRANSPORT

(30) Priority: 27.02.2020 PL 43306720
(43) Date of publication of application: 01.09.2021
(73) Proprietor: WAMECH Producent Wozkow Przemyslowych Piotr i Albina Wasik Spolka Jawna, 30-435 Krakow (PL)
(72) Inventor: Gruza, Antoni, 32-010 Kocmyrzów (PL); Mroczek, Marek, 30-658 Kraków (PL)
(74) Representative: Hubisz, Ryszard

(56) References cited:
- EP-A1- 2 865 585
- EP-A2- 1 824 435
- EP-B1- 1 824 435
- EP-B1- 2 865 585
- DE-A1-102011 000 817
- DE-A1-102011 112 889
- JP-U- S61 158 565
- JP-Y2- H0 421 750

## Description

The subject of the invention is a transport set consisting of a transport platform and a transport carriage, used to transport components or finished products in factories or various types of warehouses, storehouses and storage rooms.

As disclosed in Polish patent No. PL223301 and European patent No. EP2865585, the transport set also consists of a transport platform and a transport carriage, which has a chassis frame mounted on swivel wheels, a sliding bed with ramps, a lifting-locking mechanism with a directional mechanism and a locking mechanism of the transport carriage after the transport carriage runs over the sliding beds located on the side arms of the transport platform's chassis frame. The transport platform sliding beds have angled lower vertical guide surfaces that facilitate the manoeuvring of the transport carriage onto the transport platform.

In the solution known from Polish patent No. PL223301 and European patent No. EP2865585, the transport carriage is equipped with a directional mechanism with a middle wheel moving along an arc path, which is moved from the raised position to the lowered position, in which the pressure force of the centre wheel in contact with the ground, on which the transport carriage moves, is regulated by a spring which is attached to the tee with one end and to the chassis frame with the other.

Publication of European Patent Application Description No. EP 1 824 435 A2 titled "A wheeled object of the type adapted to be operated by a walking person" describes a wheeled vehicle, for example hospital bed, that comprises a main chassis supported by a plurality of supporting wheels, which define the vertices of a polygonal supporting surface. The bed is provided with at least one motor driven driving device, including at least one driving wheel or roller, positioned within said polygonal supporting surface. The driving device is rotatable about a substantially vertical axis in relation to the chassis or frame so as to change the angular position of the driving wheel in relation to the chassis or frame. Biasing means, such as a compression spring or a pneumatic or hydraulic cylinder is provided for biasing the driving device in a direction away from the main chassis or frame and towards the supporting surface. The biasing force is controlled such that the driving device is kept in close non-skidding contact with the ground or floor surface without lifting the supporting wheels out of contact with the supporting surface.

Additionally, publication of German Patent Application Description No. DE 10 2011 000817 A1, titled "Zusatzrolle", teaches an auxiliary roller having a rigid frame with a drivable wheel mounted in the frame and having an axle. The wheel together with the frame relative to the chassis on which the additional roller is attached can be raised or lowered by pivoting. A compression spring pivoted at one end to the chassis is provided in order to close the wheel in the lowered position with regard to contact with the ground burden. A transverse connection connecting two frame parts in the direction of an axis of the wheel the compression spring is articulated at the other end on the cross connection in such a way that the compression spring pivots the frame about the pivot point fixed to the chassis when the wheel is raised or lowered.

Furthermore, publication of German Patent Application Description No. DE 10 2011 112889 A1, titled "Fördermittel mit Lastausqleich" describes a conveyor that has a frame secured by a lever mechanism in lowered and lifted positions. An axle body is height-adjustable and locked with the frame in lowered and lifted positions. Force required for height adjustment is partially balanced by a spring element and applied by drive motors. The body is pivotably supported around a tilting axis placed transverse to a driving direction. A towing bar is present on a front end of the conveyor and a clutch is present on a rear end of the conveyor.

In the above-mentioned solutions, the transport carriage is operated manually with the use of physical force from a worker. Its size and design comply with generally applicable regulations, which do not allow manual handling of carriages with a gross weight of over 450 kilograms.

In turn, publication of US Patent Application Description No. US 2017/0129522 A1, titled "Powered utility cart and compliant drive wheel therefor", teaches a lift-enabled motorized wheel assembly and material handling cart. A drive wheel is supported on an axel between a fixed leg and a floating leg. The axel passes through the fixed leg without interference, but is captured in the floating leg by a self-aligning bearing. The axle is driven by a drive motor that is bolted to the fixed leg through a right-angle gearbox. A vertical suspension unit provides compliance for drive wheel traction. A lifter sub-assembly alternately raises and lowers the drive wheel into and out of contact with the ground. The lift-enabled motorized wheel assembly is attached to the bottom of a cart frame, along with a plurality of caster wheels. The cart includes a tow-bar that is moveable between raised and lowered positions. When the tow-bar is lowered condition for towing, the drive wheel automatically lifts out of contact with the ground.

The above-described cart has an axle that is driven by a drive motor that is bolted to the fixed leg through a right-angle gearbox. This cart is not able to transport articles that weigh more than 1000 kilograms.

The aim of the invention is to create such a construction of the transport set that would allow one to increase the gross weight of the transport carriage up to 1500 kilograms, while eliminating the barrier of the load capacity acceptable for manual operation provided for in the regulations.

The aim of the invention is achieved by providing a transport carriage with a compact drive mechanism having the features defined in claim 1, as well as replacing a directional mechanism and allowing interaction between the transport platform and the transport carriage thanks to a control system, with which the compact driving mechanism is lifted automatically onto the transport platform during transport. The preferred embodiments are defined in the respective dependent claims.

A compact drive unit with a drive wheel driven by a drive unit, which is the drive and directional system of the transport carriage, is pivoted to the support frame of the transport carriage from the bottom by means of a connecting frame, and indirectly to the rocker arm and indirectly to the connecting frame via a lever assembly and the damper the linear actuator is pivotally installed acting on the rocker arm when lowering and lifting the drive wheel in contact with the ground in the lowered position.

The drive unit of the drive wheel is a motor, the drive shaft of which is coupled to the shaft of the drive wheel, and the shaft of the drive wheel is rotationally mounted in the rocker arm.

According to the invention, the rocker has two swing arms, each pivotally connected to the connecting frame in the area of the first end, wherein a rod, which is one of the elements of the assembly, and to which at least one shock absorber is articulated at one end, is mounted at the other ends of the swing arms, the other end of which is articulated to an internal eccentric rocker arm non-rotatably attached to a rotating shaft rotatably mounted in the connecting frame, wherein an eccentric lever with a protruding end is non-rotatably attached to the rotating shaft, to which a linear actuator is articulated at one end, the other end of which is articulated to the connecting frame.

According to the invention, the drive unit comprises a drive motor attached to at least one rocker arm and a gear, wherein one gear wheel is non-rotatably mounted on the drive shaft of the drive motor, and the other gear wheel is mounted non-rotatably on the drive wheel shaft, which is rotatably mounted in the rocker arms.
The drive unit motor is a DC motor powered by a battery attached to the carriage frame of the transport carriage or to the connecting frame.

The transport carriage immobilising mechanism is equipped with a hitch hook which hooks onto the front beam of the transport carriage and cooperates with a coupling system consisting of a pull-back lever connected with a rod to the releasing pedal.

The invention will be described below on the basis of preferred embodiments which are illustrated in the accompanying schematic figures of drawings in which:
Fig. 1 presents a side view of the transport set according to one of the embodiments and to the invention;
Fig. 2 presents a top view of the transport set according to one of the embodiments and to the invention;
Fig. 3 and 4 present detailed elements of the transport set according to one of the embodiments;
Fig. 5 presents a side view of the transport carriage according to one of the embodiments and to the invention;
Fig. 6 and 7 present the immobilising mechanism of the transport carriage and coupling system;
Fig. 8 presents an axonometric view of an embodiment of the compact drive unit with direct drive from the motor shaft;
Fig. 9 presents an axonometric view of an embodiment of the compact drive unit with the drive transferred via belt transmission;
Fig. 10 presents a side view of an embodiment of the compact drive unit with the drive transferred via belt transmission shown in Fig. 9;
Fig. 11 presents a front view of an embodiment of the large-sized transport set according to the invention;
Fig. 12 presents a top view of an embodiment of the large-sized transport set according to the invention shown in Fig. 11;
Fig. 13 presents an axonometric view of the transport set in another embodiment related to two transport carriages according to the invention;
Fig. 14 presents an electrical installation diagram of the transport carriage according to the invention.

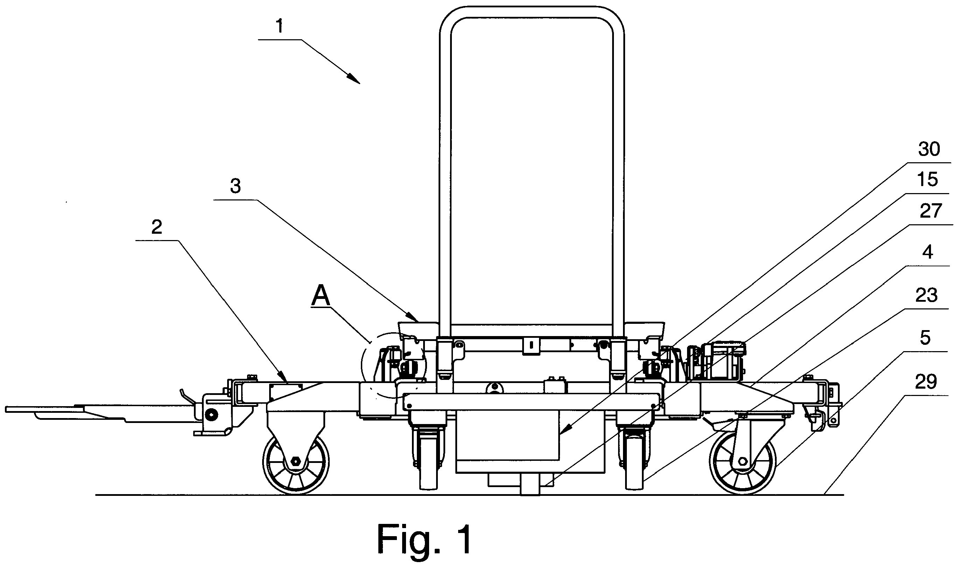

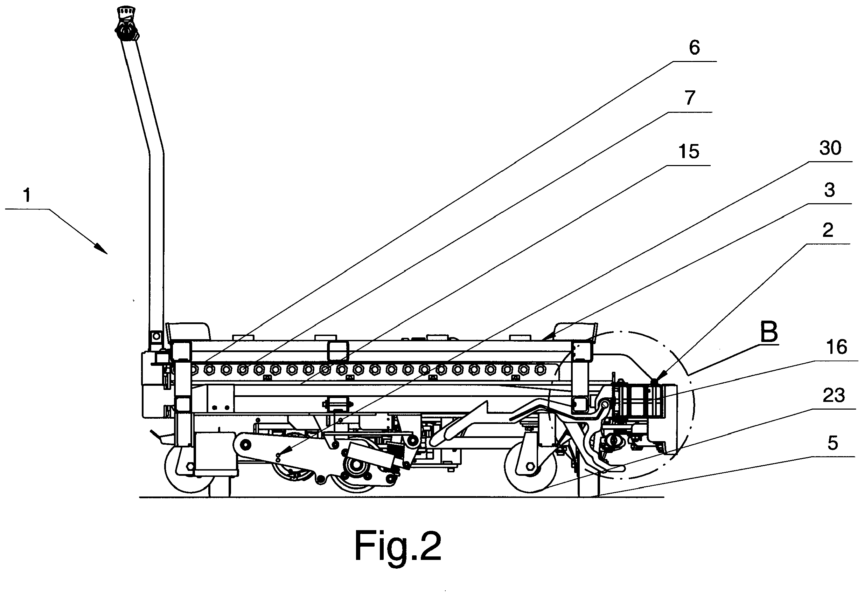

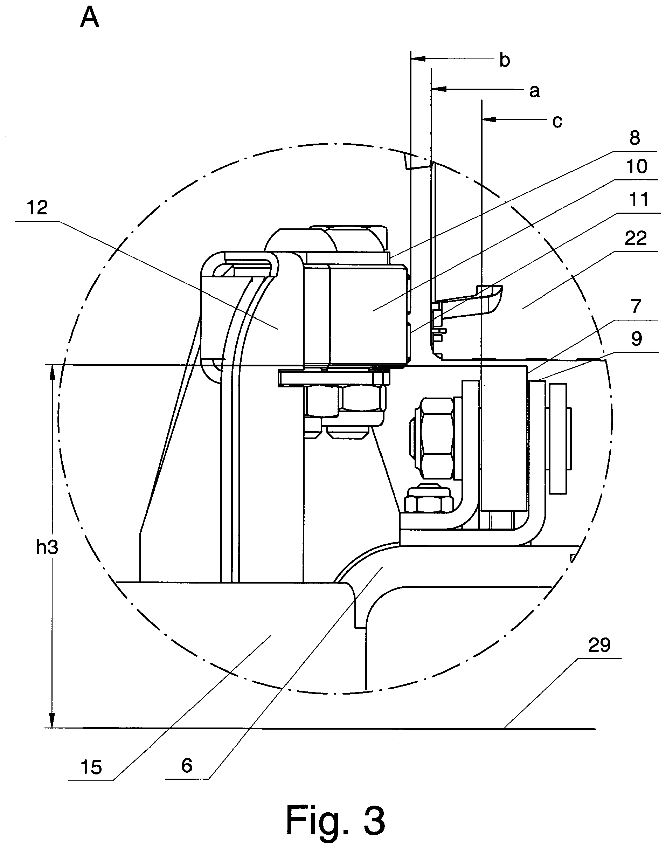

The transport set 1, shown in Fig. 1 and 2, includes a transport platform 2 and transport carriage 3. The transport platform 2 has a frame 4, the side arms 15 of which are positioned at an angle to the longitudinal axis of the transport carriage 3 and are connected by a longitudinal beam 16. This angle may be 90 degrees, which means that in one embodiment, the side arms 15 are perpendicular to the longitudinal axis of the transport platform 2. The frame 4 of the transport platform 2 in one embodiment is mounted on swivel wheels 5. The frame 4 of the transport platform 2 on the side arms 15 has, on the upper side, sliding beds 6, which have rolling elements 7, preferably ball bearings, along their entire length. The sliding beds 6, shown in Fig. 3, have bottom side vertical planes 8 and a top horizontal plane 9. On the sides of the sliding beds 6, there are horizontal sliding elements 10 with upper side vertical planes 11, which stabilise the transport carriage 3 laterally. The first sliding elements 10 are folded outwards with respect to the others. At the entrances to the sliding beds 6, in front of the horizontal sliding elements 10, there are diverged vertical lead-in surfaces 12. The horizontal sliding elements 10 in one embodiment are in the form of a plastic sleeve.

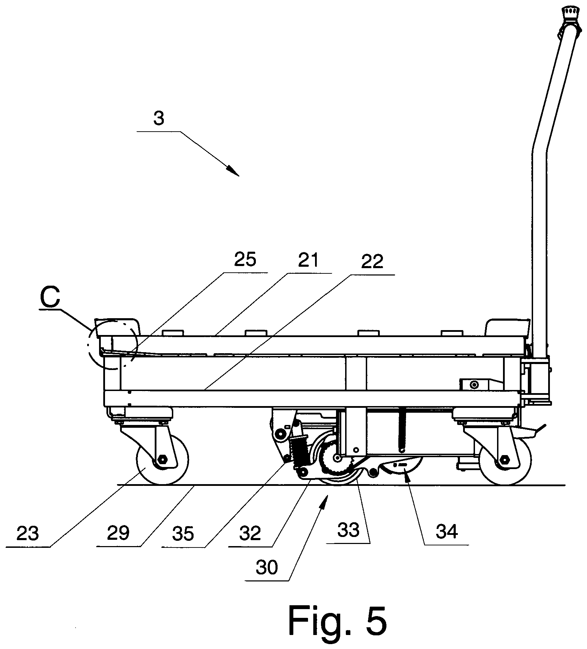

The transport carriage 3, shown in Fig. 5, has a transport frame 21, under which it has a chassis support frame 22 arranged on swivel wheels 23, wherein its width a, measured in the direction of the longitudinal axis of the transport platform 2, is greater than the distance c between the lower side vertical planes 8 of the sliding beds 6 and is less than the distance between the upper side vertical planes 11 of the sliding beds 6, which are provided with the tilted vertical lead-in surfaces 12, as shown in Fig. 3.

To the support frame 22 of the transport carriage 3, shown in Fig. 5, a compact drive unit 30 with a drive wheel 33, driven by a drive unit 34 constituting the drive and directional system of the transport carriage 3, is pivotally connected from below by means of a connecting frame 31 using a rocker 32, and to the rocker 32 and the connecting frame 31, a wheel-lowering linear actuator 35 is connected, acting on the rocker 32 when lowering and lifting the drive wheel 33, in contact with the ground 29 in the lowered position. This means that even when the transport carriage 3 is on the transport platform 2, the compact drive unit 30 can be lowered to a position such that the drive wheel 33 will come into contact with the ground, which will allow the transport carriage to move relative to the ground when the transport carriage is disengaged. It should also be noted that the compact drive unit 30 and the linear actuator 35 are designed such that the linear actuator 35 is able to lift the drive unit 30 to a position such that in the locked position of the transport carriage, the drive wheel 33 will not come into contact with the ground, thus enabling the transport of the transport carriage 3 on the transport platform 2 to another location.

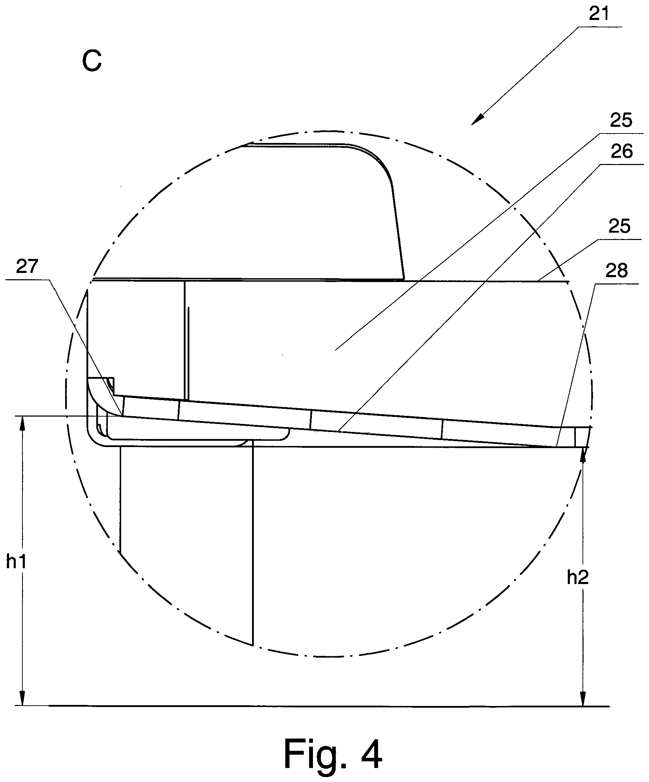

The side arms 24 of the transport frame 21 of the transport carriage 3, shown in Fig. 5, have ramps 25 with raised rake surfaces 26, shown as lines in Fig. 4, with a beginning 27 and an end 28 for leading onto the sliding beds 6 of the frame 4 of the transport platform 2. The beginning 27 of the rake surface 26 is located at a height h1, measured from the top surface 29 of the ground, which is the plane defined by the lowest points of the swivel wheels 5 of the transport platform 2. The end 28 of the rake surface 26 is located at a height h2 less than the height h3 of the location of the upper horizontal plane of the sliding beds 6 of the transport platform 2, shown in Fig. 2.

The direction of travel of the transport carriage 3 is kept by acting on the swivel wheels 23, similar to the solution shown in patent application EP 2 865 585 B1. When coupling the transport carriage 3 with the transport platform, the transport carriage 3 runs up to the transport platform 2 and, with the beginnings 27 of ramps 25 with rake surfaces 26, is directed to the rolling elements 7 of the sliding beds 6, between the slide elements of the sliding beds 6, as shown in Fig. 3. The approach direction is also stabilised by the tilted vertical lead-in surfaces 9, as shown in Fig. 4. The driven transport carriage 3, oriented in this way, drives onto the transport platform or the base carriage 2 over the rolling elements 7 of the sliding beds 6. Thus, the transport carriage 3 is arranged on the transport platform 2 and ready for travel, individually or in combination, on a transport platform 2 pulled by any tractor.

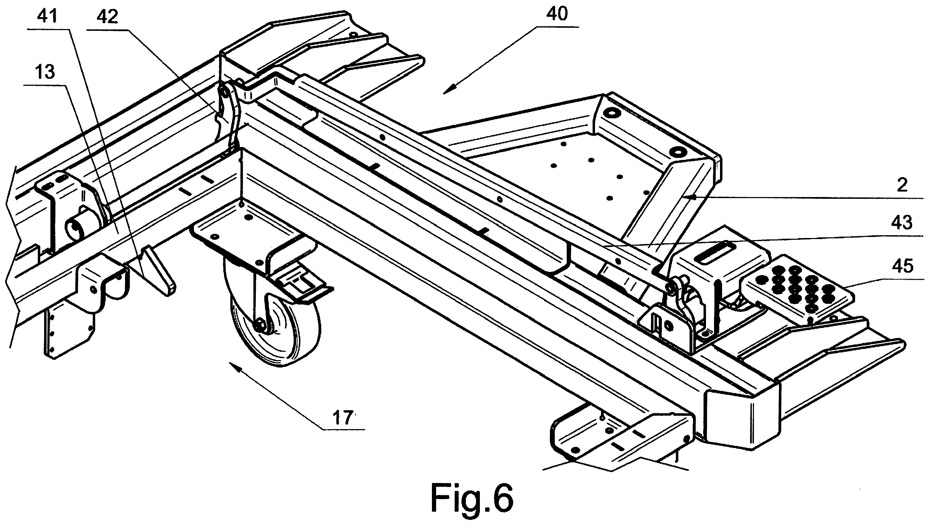

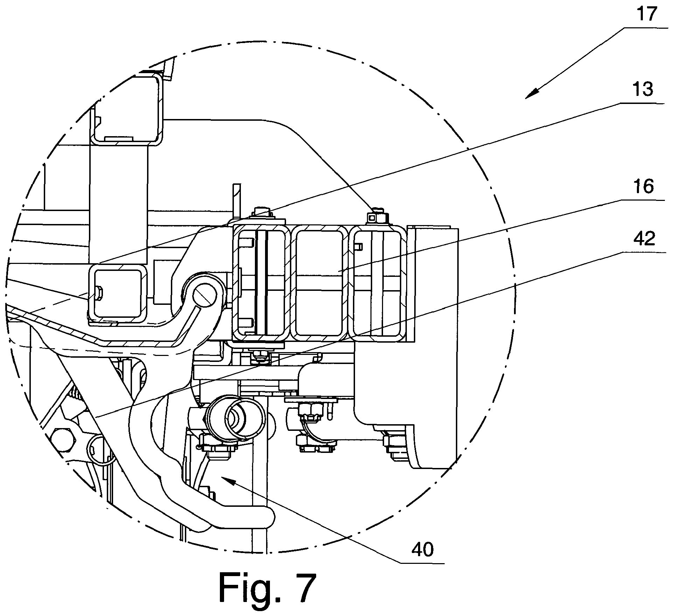

Fig. 6 and 7 present the transport carriage immobilising mechanism 17 equipped with a hitch hook 41, which hooks onto the front beam 13 of the transport carriage 3 and cooperates with a coupling system 40 consisting of a pull-back lever 42 connected with a rod 43 to the releasing pedal 45.

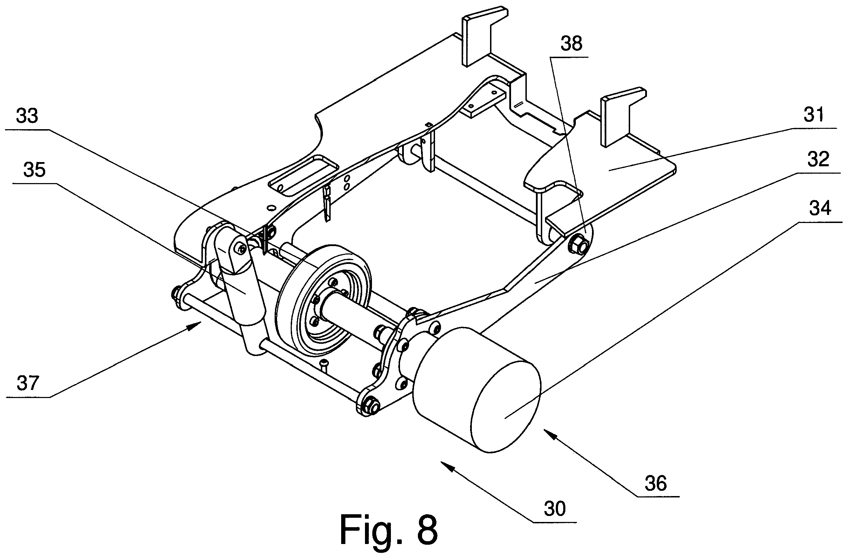

Fig. 8 shows one embodiment of a compact drive unit 30 attached from below, by means of a connecting frame 31, to the support frame 22 of a transport carriage 3. As can be seen from the figure, the drive unit 34 of the drive wheel is a motor attached to the rocker arm 32, the drive shaft of which is coupled to the shaft of the drive wheel 33. The shaft of the drive wheel 33 is fixedly connected to the drive wheel 33 and is rotatably mounted in the rocker 32. In another embodiment, the compact drive unit 30 has a rocker arm 32 in which the elongated shaft of the drive unit 34 is mounted on bearings. The elongated shaft of the drive unit 34 has, in its part contained between the rocker arms 32, a non-rotating drive wheel 33, which constitutes the drive and directional system of the transport carriage 3.

In one embodiment, a linear actuator 35 is articulated at one end to the connecting frame 31, the other end of which is articulated to the connecting rod of the rocker arm 32. The linear actuator 35 acting on the rocker arm 32 changes its length when the drive wheel 33 is lowered and raised and is in contact with the ground in a lowered position, which allows the transport carriage to move relative to the ground after it is unlocked and the compact drive unit is engaged. Varying the length of the linear actuator 35 and others described below, for example 235, means a change in distance between the articulation of the cylinder of the linear actuator 35, attached for example to the connecting frame or frame of the transport carriage, and the articulation located at the end of the piston rod of the linear actuator 35.

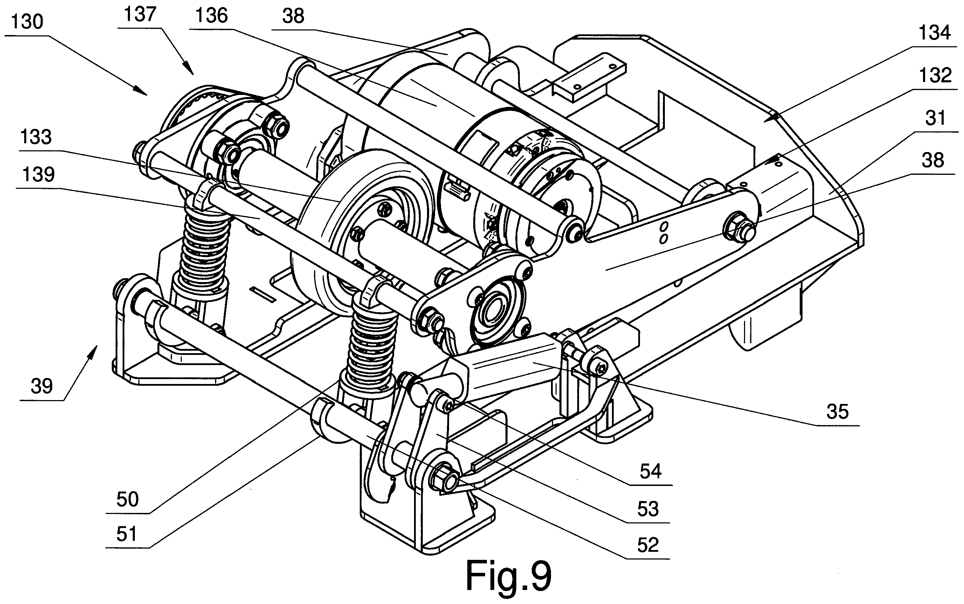

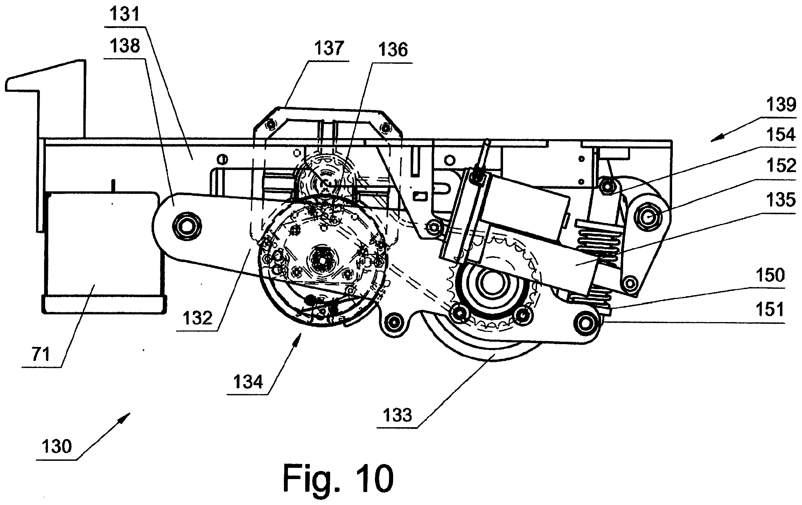

In Figs. 9 and 10, another embodiment of the compact drive unit 130 is shown which includes a rocker 132 having two rocker arms 38, each in the region of a first end pivotally attached to a connecting frame 31, wherein at the second ends of the rocker arms 38, 138, a longitudinal element is located, for example a rod 139 is mounted, which is one of the elements of the lever assembly 39,139, and to which at one end, at least one shock absorber 50, 150 is pivotally attached, the other end of which is attached via a hinge to the internal eccentric arm 51, 151, attached to a rotatable shaft 52, 152, non-rotatably relative to it, and rotatably mounted in the connecting frame 31, 131. An eccentric lever 53 with a projecting end 54, 154 is attached to the rotating shaft 52, 152, not rotatable in relation to it, to which a linear actuator 35, 135 is articulated at one end for lowering the wheel, acting on the rocker 32, 132 when lowering and lifting the drive wheel 33, 133, the other end of which is attached via a hinge to the connecting frame 31, 131.

At this point, it can be pointed out that the difference between the solution presented in EP 2 865 585 B1 is that the swivel wheel direction mechanism of the aforementioned patent has been replaced by a compact drive unit 30 or 130 with a drive wheel 33 or 133, being the drive and directional system of the transport carriage 3, and with a rocker 32 or 132 for lowering and lifting the drive wheel 33 or 133, in contact with the ground in the lowered position, which is driven by a drive unit 34 or 134, which is, for example, a motor 36 or 136 attached to rocker 32 or 132.

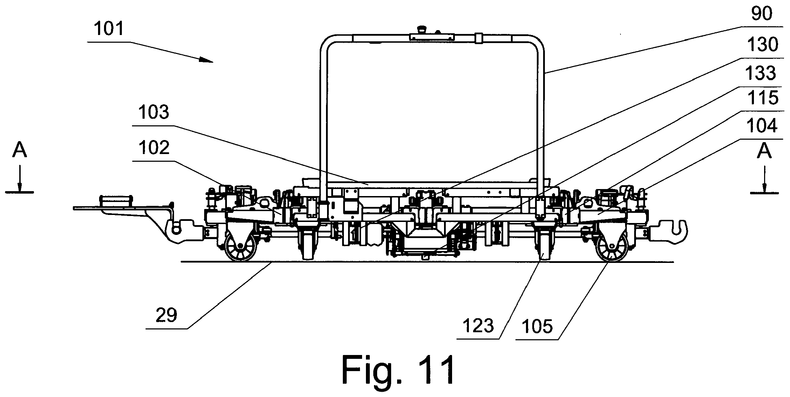

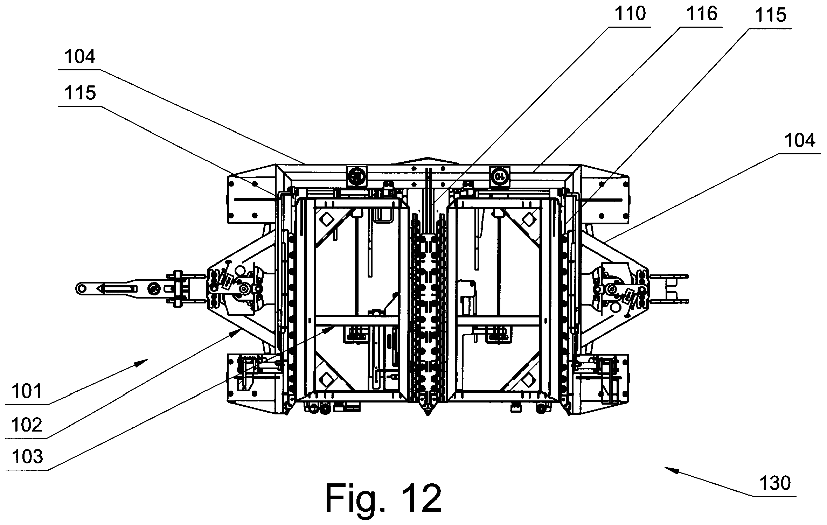

Fig. 11 and 12 show another embodiment of a transport assembly 101 with a drive unit 130, which is a large version thereof, wherein Fig. 11 is a side view of the transport assembly 101, and Fig. 12 presents a top view of the transport assembly 101. The transport set 101 in the large-size version is similar to the transport set 1 shown in Fig. 1 and 2 and includes a transport platform 102 and transport carriage 103. The transport platform 102 has a frame 104, the side arms 115 of which are positioned at an angle to the longitudinal axis of the transport carriage 103, for example they are located in parallel to the longitudinal axis of the transport platform 102 and are connected by a longitudinal beam 116. The frame 104 of the transport platform 2 is mounted on swivel wheels 105. The frame members 104 of the transport platform 102 have similar structural elements, and their dimensions are the same compared to the dimensions of the frame members 4 of the transport platform 2 in Fig. 1 and 2. Only the frame 104 has an additional centre arm 110 attached to the longitudinal beam 116, which acts as an additional stabiliser in the position of the transport carriage 103 after it is placed on the transport platform 102. In one preferred embodiment, the longitudinal beam or centre arm 116 is equidistant from the side arms 115 and divides the space between the side arms into two equal parts.

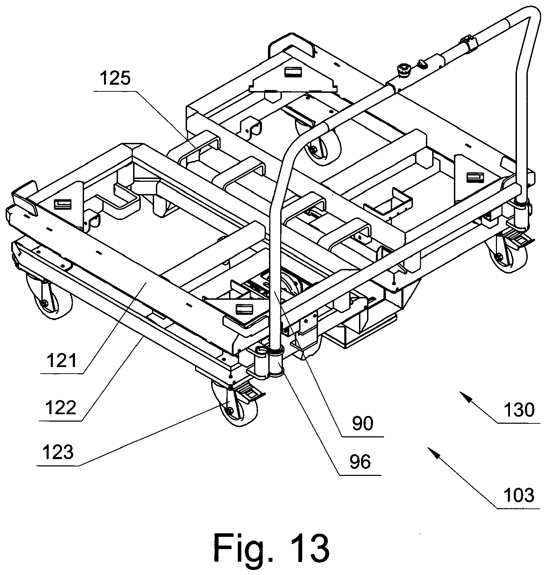

The transport carriage 103, shown in detail in Fig. 13, like the transport carriage 3, shown in Fig. 3, has a transport frame 121, under which it has the support frame 122 of the chassis positioned on swivel wheels 123. In a particularly preferred embodiment, the transport frame 121 is formed of two transport frames 21 of a transport carriage 3, and the support frame 122 is formed of two support frames 22 of a transport carriage 3, shown in Fig. 3; however, the frame elements are mutually connected using fasteners 125. Moreover, the transport carriage 103, like the transport carriage 3 in the embodiment shown in Fig. 1, has a handle 90 embedded in slots 96 attached to the support frame 122.

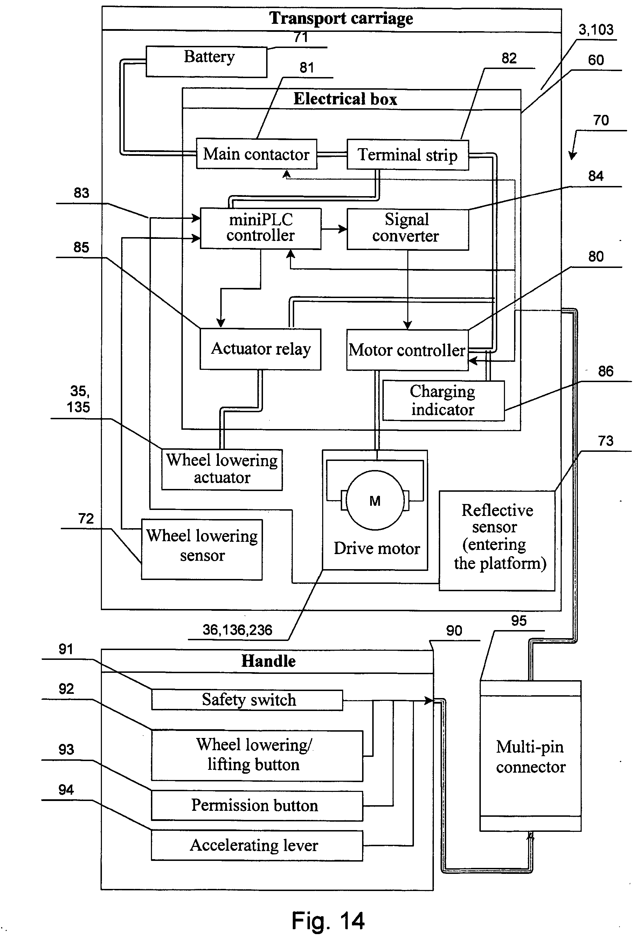

Fig. 14 shows an electrical installation, the main components of which are located on a transport carriage 3 or 103, respectively, and on its handle 90.

The electrical installation 70 comprises a battery 71, to which a main contactor 81 is connected in the electrical box 60. A terminal block 82 is connected to the main contactor 81, which distributes power between the miniPLC controller 83, the motor controller 80, the actuator relay 85 and the actuator 35 or 135 or 235, for wheel lowering and the charge indicator 86.

The control elements are located on the handle 90: a safety switch 91, a button for lowering / lifting the wheel 92, a permission button 93 and an accelerator level 94. Control signals from the elements on the handle 90 are transmitted to the electrical box 60 via a detachable multi-pin connector 95.

The miniPLC controller 83 interprets the signals from the individual sensors, such as the wheel-lowering sensor 72, the reflective sensor 73 and the signals from the components on the handle 90, and is responsible for controlling the speed and direction of rotation of the drive motor 36 or 136 or 236 via a signal converter 84 and a motor controller 80.

The miniPLC controller 83, via the actuator relay 85, controls the actuator 35 or 135 or 235 for lowering the wheel by lifting or lowering the compact drive unit 30 or 130 or 230, respectively.

### List of numerical references

- 1: transport set;
- 2: transport platform;
- 3: transport carriage;
- 4: frame;
- 5: swivel wheels;
- 6: sliding beds;
- 7: rolling elements;
- 8: lower side vertical planes;
- 9: horizontal top plane;
- 10: horizontal sliding elements;
- 11: upper side vertical planes;
- 12: vertical leading-in surfaces;
- 13: front beam;
- 15: side arms;
- 16: longitudinal beam;
- 17: immobilising mechanism;
- 21: transport frame;
- 22: support frame;
- 23: swivel wheels;
- 24: side arms of transport frame;
- 25: ramp;
- 26: rake surface;
- 27: beginning of leading onto the sliding beds;
- 28: end of leading onto the sliding beds;
- 29: base;
- 30: compact drive unit;
- 31: connecting frame;
- 32: rocker;
- 33: drive wheel;
- 34: drive unit;
- 35: wheel lowering linear actuator;
- 36: drive motor;
- 37: shock-absorber;
- 38: rocker arms;
- 39: lever assembly;
- 40: coupling system;
- 41: hitching hook;
- 42: pull-back lever;
- 43: pull rod;
- 45: releasing pedal;
- 50: shock-absorber,
- 51: internal rocker;
- 52: rotational shaft;
- 53: eccentric lever;
- 54: projecting end;
- 60: electrical box;
- 70: electrical system;
- 71: battery;
- 72: wheel lowering sensor;
- 73: reflective sensor;
- 80: motor controller;
- 81: main contactor;
- 81: terminal strip;
- 83: miniPLC controller;
- 84: signal converter;
- 85: actuator relay;
- 86: charging indicator;
- 90: handle;
- 91: safety switch;
- 92: lowering/lifting the wheel switch;
- 93: permission button;
- 94: accelerating lever;
- 94: multi-pin connector;
- 96: sockets;
- 101: transport set;
- 102: transport platform;
- 103: transport carriage;
- 104: frame;
- 105: swivel wheels;
- 110: middle arm;
- 115: side arms;
- 116: longitudinal beam;
- 121: transport frame;
- 122: support frame;
- 123: swivel wheels;
- 125: connection elements;
- 130: compact drive unit;
- 131: connecting frame;
- 132: rocker;
- 133: drive wheel;
- 134: drive unit;
- 135: wheel lowering actuator;
- 136: drive motor;
- 137: shock-absorber,
- 138: rocker arms;
- 139: rod;
- 150: shock-absorber,
- 151: rocker;
- 152: rotational shaft;
- 154: projecting end.

## Claims

1. A transport set (1) including a transport platform (2) and a transport carriage (3) adapted for its lifting and seating on the transport platform (2) having a frame (4) of a chassis positioned on swivel wheels (5) and having an immobilising mechanism (17) of the transport carriage (3), wherein side arms (15) of the frame (4) of the chassis of the transport platform (2) are located at an angle in relation to a longitudinal axis of the transport carriage and have sliding beds (6) with flared lower vertical leading-in surfaces, the transport carriage (3), located in the space between the side arms of the transport platform (2), has a support frame (22) of a chassis installed on swivel wheels (23), a coupling system (40) installed on the support frame (22) and cooperating with the immobilising mechanism (17) and causing the transport carriage (3) to stop on the transport carriage (2) and a transport frame (21) installed on the support frame (22) of the chassis and adapted to enter onto the sliding beds (6) of the transport platform (2) and having an external width (a) measured towards the longitudinal axis of the transport platform (2) greater than a distance (c) measured between lower side vertical planes of the sliding beds (6) and less than the distance (b) measured between upper side vertical planes of the sliding beds (6), which have flared lower vertical leading-in surfaces, wherein each of the side arms of the transport frame (21) of the transport carriage (3) has ramps (25) with inclined rake surfaces (26) from the front and bottom, beginnings of which are located at height (h1) measured from the ground, greater than height (h2) measured from the bottom of location of a top horizontal plane of sliding beds, ends of which are located at height (h2) measured from the ground (29), less than a height (h3) of location of the top horizontal plane of sliding beds,
**characterized in that**, the support frame (22) of the transport carriage (3) is connected from the bottom to the connecting frame (31), to which a rocker (32) is installed with one end that supports the compact drive unit (130) with a drive wheel (33) driven with a drive unit (134), representing a drive and directional system of the transport carriage (103), and **in that** the connecting frame (31) is pivotally connected to one of the ends of a linear actuator (35), the other end of which is pivotally attached to the other end of the rocker (132), and **in that** the linear actuator (35) acting on the rocker (132) changes its length when lowering and lifting the drive wheel (33), which is in contact with the ground when in a lowered position, which precludes movement of the transport carriage (3) in relation to the ground after its unlocking and activating the compact drive unit (130), whereas the rocker (132) has two swing arms connected with each other, each pivotally connected to the connecting frame (31) in the area of the first end, wherein a rod (139) is seated at the other ends of the rocker arms (38), to which at least one shock absorber (50) is articulated at one end, and with the other end is pivotally mounted to an internal eccentric rocker (51) non-rotatably attached to a rotating shaft (52) rotatably mounted in the connecting frame (31), wherein an eccentric lever (53) with an protruding end (54), being non-rotatably attached to the rotating shaft (52), to which a linear actuator (35) is articulated at one end, the other end of which is articulated to the connecting frame (31) whereby the drive unit (134) comprises a drive motor (136) and a gear (137) which are attached to at least one arm (38) of the rocker (132), one gear wheel (137) being mounted non-rotatably on the drive shaft of the drive motor (136), and the second gear wheel (137) is mounted non-rotatably on a shaft that is permanently connected to the drive wheel (133) and which is rotatably mounted in the arms (38) of the rocker (132).

2. The transport set (1) according to claim 1, **characterised in that** the motor (136) of the drive unit (134) is a DC motor powered by a battery (71) which is attached to the supporting frame (22) of the transport carriage (3) or to the connecting frame.

3. The transport set (1) according to claim 1 or 2, **characterised in that** the transport carriage immobilising mechanism (17) is equipped with a hitch hook (41) which hooks onto a front beam (13) of the transport carriage (3) and cooperates with a coupling system (40) consisting of a pull-back lever (42) connected with a rod (43) to a releasing pedal (45).

## Patentansprüche

1. Transportset (1), einschließend eine Transportplattform (2) und einen zu ihrem Anheben und Absetzen auf der Transportplattform (2) ausgelegten Transportwagen (3) mit einem auf Schwenkrädern (5) positionierten Rahmen (4) eines Fahrgestells und mit einem Feststellmechanismus (17) des Transportwagens (3), wobei sich Seitenarme (15) des Rahmens (4) des Fahrgestells der Transportplattform (2) in einem Winkel in Bezug auf eine Längsachse des Transportwagens befinden und Schlitten (6) mit aufgeweiteten unteren vertikalen Einleitungsoberflächen aufweisen, der Transportwagen (3), der sich in dem Raum zwischen den Seitenarmen der Transportplattform (2) befindet, Folgendes aufweist: einen auf Schwenkrädern (23) installierten Stützrahmen (22) eines Fahrgestells, ein Kopplungssystem (40), das an dem Stützrahmen (22) installiert ist und mit dem Feststellmechanismus (17) zusammenwirkt und bewirkt, dass der Transportwagen (3) an dem Transportwagen (2) anhält, und einen Transportrahmen (21), der an dem Stützrahmen (22) des Fahrgestells installiert ist und dazu ausgelegt ist, auf die Schlitten (6) der Transportplattform (2) zu gelangen, und eine in Richtung der Längsachse der Transportplattform (2) gemessene äußere Breite (a) aufweist, die größer als ein zwischen unteren seitlichen vertikalen Ebenen der Schlitten (6) gemessener Abstand (c) ist und kleiner als der zwischen oberen seitlichen vertikalen Ebenen der Schlitten (6), die aufgeweitete untere vertikale Einleitungsoberflächen aufweisen, gemessene Abstand (b) ist, wobei jeder der Seitenarme des Transportrahmens (21) des Transportwagens (3) Rampen (25) mit geneigten Schrägenoberflächen (26) von der Vorderseite und Unterseite aus aufweist, deren Anfänge sich in einer vom Boden aus gemessenen Höhe (h1) befinden, die größer als eine von der Unterseite einer Lage einer oberen horizontalen Ebene der Schlitten gemessene Höhe (h2) ist, deren Enden sich in der vom Boden (29) aus gemessenen Höhe (h2) befinden, die kleiner als eine Höhe (h3) einer Lage der oberen horizontalen Ebene der Schlitten ist,
**dadurch gekennzeichnet, dass** der Stützrahmen (22) des Transportwagens (3) von der Unterseite aus mit dem Verbindungsrahmen (31) verbunden ist, an dem eine Schwinge (32) mit einem Ende installiert ist, das die kompakte Antriebseinheit (130) mit einem Antriebsrad (33) stützt, das mit einer Antriebseinheit (134) angetriebenen wird, die ein Antriebs- und Richtungssystem des Transportwagens (103) darstellt, und dadurch, dass der Verbindungsrahmen (31) gelenkig mit einem der Enden eines Linearaktors (35) verbunden ist, dessen anderes Ende gelenkig an dem anderen Ende der Schwinge (132) angebracht ist, und dadurch, dass der Linearaktor (35), der auf die Schwinge (132) einwirkt, beim Absenken und Anheben des Antriebsrads (33) seine Länge ändert, das in einer abgesenkten Position mit dem Boden in Kontakt steht, was eine Bewegung des Transportwagens (3) in Bezug auf den Boden nach seinem Entriegeln und Aktivieren der kompakten Antriebseinheit (130) verhindert, wohingegen die Schwinge (132) zwei miteinander verbundene Schwingarme aufweist, die jeweils in dem Bereich des ersten Endes gelenkig mit dem Verbindungsrahmen (31) verbunden sind, wobei eine Stange (139) an den anderen Enden der Schwingarme (38) sitzt, an die mindestens ein Stoßdämpfer (50) an einem Ende angelenkt ist, und mit dem anderen Ende gelenkig an einer inneren Exzenterschwinge (51) montiert ist, die nicht drehbar an einer Drehwelle (52) angebracht ist, die drehbar in dem Verbindungsrahmen (31) montiert ist, wobei ein Exzenterhebel (53) mit einem vorstehenden Ende (54), der nicht drehbar an der Drehwelle (52) angebracht ist, an die ein Linearaktor (35) an einem Ende angelenkt ist, dessen anderes Ende an den Verbindungsrahmen (31) angelenkt ist, wodurch die Antriebseinheit (134) einen Antriebsmotor (136) und ein Getriebe (137) umfasst, die an mindestens einem Arm (38) der Schwinge (132) angebracht sind, wobei ein Zahnrad (137) nicht drehbar an der Antriebswelle des Antriebsmotors (136) montiert ist und das zweite Zahnrad (137) nicht drehbar an einer Welle montiert ist, die dauerhaft mit dem Antriebsrad (133) verbunden ist und die drehbar in den Armen (38) der Schwinge (132) montiert ist.

2. Transportset (1) nach Anspruch 1, **dadurch gekennzeichnet, dass** der Motor (136) der Antriebseinheit (134) ein Gleichstrommotor ist, der durch eine Batterie (71) mit Leistung versorgt wird, die an dem Stützrahmen (22) des Transportwagens (3) oder an dem Verbindungsrahmen angebracht ist.

3. Transportset (1) nach Anspruch 1 oder 2, **dadurch gekennzeichnet, dass** der Feststellmechanismus (17) des Transportwagens mit einem Kupplungshaken (41) ausgestattet ist, der an einem vorderen Träger (13) des Transportwagens (3) eingehakt wird und mit einem Kopplungssystem (40) zusammenwirkt, das aus einem Rückziehhebel (42) besteht, der mit einer Stange (43) mit einem Freigabepedal (45) verbunden ist.

## Revendications

1. Ensemble de transport (1) comprenant une plateforme de transport (2) et un chariot de transport (3) adapté pour son levage et sa dépose sur la plateforme de transport (2) ayant un cadre (4) d'un châssis positionné sur des roues pivotantes (5) et comportant un mécanisme d'immobilisation (17) du chariot de transport (3), dans lequel des bras latéraux (15) du cadre (4) du châssis de la plateforme de transport (2) sont situés à un angle par rapport à un axe longitudinal du chariot de transport et ont des lits coulissants (6) avec des surfaces d'entrée verticales inférieures évasées, le chariot de transport (3), situé dans l'espace entre les bras latéraux de la plateforme de transport (2), a un cadre de support (22) d'un châssis monté sur roues pivotantes (23), un système d'accouplement (40) monté sur le cadre de support (22) et coopérant avec le mécanisme d'immobilisation (17) et provoquant l'arrêt du chariot de transport (3) sur le chariot de transport (2) et un cadre de transport (21) monté sur le cadre de support (22) du châssis et adapté pour entrer sur les lits coulissants (6) de la plateforme de transport (2) et ayant une largeur externe (a) mesurée vers l'axe longitudinal de la plateforme de transport (2) supérieure à une distance (c) mesurée entre les plans verticaux latéraux inférieurs des lits coulissants (6) et inférieure à la distance (b) mesurée entre les plans verticaux latéraux supérieurs des lits coulissants (6), qui ont des surfaces d'entrée verticales inférieures évasées, dans lequel chacun des bras latéraux du cadre de transport (21) du chariot de transport (3) présente des rampes (25) avec des surfaces de râteau inclinées (26) depuis l'avant et le bas, dont les débuts sont situés à une hauteur (h1) mesurée à partir du sol, supérieure à la hauteur (h2) mesurée à partir à partir du bas de l'emplacement d'un plan horizontal supérieur de lits coulissants, dont les extrémités sont situées à une hauteur (h2) mesurée à partir du sol (29), inférieure à une hauteur (h3) de l'emplacement du plan horizontal supérieur des lits coulissants,
**caractérisé en ce que**, le cadre de support (22) du chariot de transport (3) est relié par le bas au cadre de liaison (31), auquel un culbuteur (32) est monté avec une extrémité qui supporte l'unité d'entraînement compacte (130) avec une roue motrice (33) entraînée avec une unité d'entraînement (134), représentant un système d'entraînement et de direction du chariot de transport (103), et en que le cadre de liaison (31) est relié de manière pivotante à l'une des extrémités d'un actionneur linéaire (35), dont l'autre extrémité est fixée de manière pivotante à l'autre extrémité du culbuteur (132), et **en ce que** l'actionneur linéaire (35) agissant sur le culbuteur (132) change de longueur lors de l'abaissement et du relevage de la roue motrice (33), laquelle est en contact avec le sol lorsqu'elle est en position abaissée, ce qui interdit le mouvement du chariot de transport (3) par rapport au sol après son déverrouillage et l'activation de l'unité d'entraînement compacte (130), tandis que le culbuteur (132) a deux bras oscillants reliés l'un à l'autre, chacun relié de manière pivotante au cadre de liaison (31) dans la zone de la première extrémité, dans lequel une tige (139) est en appui aux autres extrémités des bras de culbuteur (38), auxquels au moins un amortisseur (50) est articulé à une extrémité, et dont l'autre extrémité est montée pivotante sur un culbuteur excentrique interne (51) fixé de manière non-rotative à un arbre rotatif (52) monté de manière rotative dans le cadre de liaison (31), dans lequel un levier excentrique (53) avec une extrémité saillante (54), étant fixé de manière non rotative à l'arbre rotatif (52), auquel un l'actionneur linéaire (35) est articulé à une extrémité, dont l'autre extrémité est articulée au cadre de liaison (31), moyennant quoi l'unité d'entraînement (134) comprend un moteur d'entraînement (136) et un engrenage (137) qui sont fixés à au moins un bras (38) du culbuteur (132), une roue d'engrenage (137) étant montée non rotative sur l'arbre d'entraînement du moteur d'entraînement (136), et la deuxième roue d'engrenage (137) est montée non rotative sur un arbre qui est lié de manière permanente à la roue d'entraînement (133) et qui est montée rotative dans les bras (38) du culbuteur (132).

2. Ensemble de transport (1) selon la revendication 1, **caractérisé en ce que** le moteur (136) de l'unité d'entraînement (134) est un moteur CC alimenté par une batterie (71) qui est fixée au cadre de support (22) du chariot de transport (3) ou au cadre de liaison.

3. Ensemble de transport (1) selon la revendication 1 ou 2, **caractérisé en ce que** le mécanisme d'immobilisation du chariot de transport (17) est équipé d'un crochet d'attelage (41) qui s'accroche à une poutre avant (13) du chariot de transport (3) et coopère avec un système d'accouplement (40) constitué d'un levier de rappel (42) relié par une tige (43) à une pédale de débrayage (45).
